# EUROPEAN PATENT APPLICATION

(11) **EP 4 641 466 A1**
(43) Date of publication of application: **29.10.2025**
(21) Application number: 23941739.7
(22) Date of filing: 23.10.2023
(51) Int. Cl.: G06Q 30/02, G06Q 30/06, G06Q 10/10, G06Q 20/06, G06Q 20/36

(54) **MARKETPLACE SERVER AND OPERATION METHOD THEREOF**

(30) Priority: 14.06.2023 KR 20230075924
(71) Applicant: LG Electronics Inc., Yeongdeungpo-gu Seoul 07336 (KR)
(72) Inventor: PARK, Byungsun, Seoul 06772 (KR); SEONG, Jongwon, Seoul 06772 (KR)
(74) Representative: Vossius & Partner Patentanwälte Rechtsanwälte mbB
(86) International application number: PCT/KR2023/016472
(87) International publication number: WO 2024/257958

(57) **Abstract**

A marketplace server according to an embodiment of the present disclosure can comprise a communication interface configured to receive advertisement sale information including personal information, advertisement area information, and advertisement use information from a user device, a database configured to store the advertisement sale information and a controller configured to receive an advertisement purchase request for the advertisement sale information from an advertiser service server and transmit advertisement purchase confirmation information including a reward to the user device according to the received advertisement purchase request.

## Description

### [Technical Field]

The present disclosure relates to a marketplace server providing advertising service.

### [Background Art]

In the existing advertising market, there are various intermediate platforms from advertiser to publisher that post advertisement, and a lot of cost is actually consumed in the distribution stage.

That is, in the current advertising market, advertiser must use many relay platforms to show advertisement to user, and accordingly, relay commissions of about 50% or more are generated.

In addition, due to the complex relationship between relay platform, fraud exists during advertisement distribution, and advertisement effect cannot be confirmed in real time, so advertising expenses are unconditionally spent within the contract period.

In addition, for accurate advertisement targeting, user data is used by service companies or advertisement platform companies, but there is no user revenue.

In accordance with the Personal Information Protection Act, it is expected that it will be difficult to use personal information for advertisement targeting, and it is impossible to measure the effectiveness of advertisement in real time due to the increase in complexity caused by the use of relay platform.

In this way, although the number of advertising media continues to increase due to the increase in various device and service, the network for distributing advertisements is very complex, resulting in high costs and pain points for all involved parties such as advertisers and publishers.

Blockchain technology is being used to solve this problem, but user participation is low.

### [Disclosure]

### [Technical Problem]

An object of the present disclosure is to directly register an advertisement area (ad displayable) and data in a basic home screen, such as a launcher app in a user's device, in a marketplace by using blockchain technology.

In addition, an object of the present disclosure is to allow an advertiser to directly purchase an advertisement area of a user registered in a marketplace to check an advertisement effect in real time, save a relay platform cost, and block fraud at the source.

### [Technical Solution]

A marketplace server according to an embodiment of the present disclosure can comprise a communication interface configured to receive advertisement sale information including personal information, advertisement area information, and advertisement use information from a user device, a database configured to store the advertisement sale information and a controller configured to receive an advertisement purchase request for the advertisement sale information from an advertiser service server and transmit advertisement purchase confirmation information including a reward to the user device according to the received advertisement purchase request.

An operation method of a marketplace server according to an embodiment of the present disclosure can comprise receiving advertisement sale information including personal information, advertisement area information, and advertisement use information from a user device; storing the advertisement sale information; receiving an advertisement purchase request for the advertisement sale information from an advertiser service server; and transmitting advertisement purchase confirmation information including a compensation to the user device according to the received advertisement purchase request.

### [Advantageous Effects]

According to an embodiment of the present disclosure, accurate targeted advertisements are possible, efficient advertisement cost execution is possible through real-time advertisement measurement, and there is no cost loss due to fraud.

In addition, it is possible to efficiently operate advertisement by daily/monthly/hourly instead of quarterly advertisement purchase contract.

In addition, it is possible to respond to follow-up marketing activity by checking the customer's feedback after watching the advertisement in real time.

Monetization can be possible in exchange for providing advertising area and data directly from the user's point of view.

An operator operating a marketplace server can create a new source of revenue by developing a new advertisement distribution platform.

In addition, in the case of selling the company's device, a program that gives a monthly discount to the device sale cost if the user agrees to this advertisement service can be operated.

### [Description of Drawings]

FIG. 1A is a diagram illustrating an advertisement system according to an embodiment of the present disclosure.
FIG. 1B is a diagram illustrating an advertisement system according to another embodiment of the present disclosure.
FIG. 2 is a block diagram illustrating the configuration of a user device according to an embodiment of the present disclosure.
FIG. 3 is a block diagram for explaining the configuration of a marketplace server according to an embodiment of the present disclosure.
FIG. 4 is a ladder diagram for explaining a method of operating an advertisement system according to an embodiment of the present disclosure.
FIGS. 5 and 6 are diagrams illustrating a process of setting personal information and advertisement area information through service screens according to an embodiment of the present disclosure.
FIG. 7 is a diagram illustrating a human NFT according to an embodiment of the present disclosure.
FIG. 8 is a diagram illustrating advertisement purchase information according to an embodiment of the present disclosure.
FIG. 9 is a diagram illustrating a user list according to an embodiment of the present disclosure.
FIGS. 10 and 11 are diagrams illustrating examples of providing advertisement in advertisement area of user device in various forms according to embodiments of the present disclosure.
FIG. 12 is a diagram for explaining a process in which a user device determines a user's advertisement preference according to an embodiment of the present disclosure.
FIGS. 13 and 14 are diagrams illustrating a process of trading an advertisement area between a manufacturer of a user device and an advertiser through a marketplace.

### [Best Mode]

Hereinafter, embodiments relating to the present disclosure will be described in detail with reference to the drawings. The suffixes "module" and "unit" for component used in the description below are assigned or mixed in consideration of easiness in writing the specification and do not have distinctive meaning or role by themselves.

A user device according to an embodiment of the present invention is, for example, an intelligent user device in which a computer support function is added to a broadcast receiving function, and an Internet function is added while being faithful to the broadcast receiving function, such as a handwriting input device, a touch screen, and the like. Alternatively, a more user-friendly interface such as a space remote control can be provided. In addition, by being connected to the Internet and a computer by supporting a wired or wireless Internet function, functions such as e-mail, web browsing, banking, or game can be performed. A standardized universal OS can be used for these various functions.

Accordingly, since various applications can be freely added or deleted in the user device described in the present invention, for example, on a general-purpose OS kernel, various user-friendly functions can be performed. The user device can be, for example, a network TV, HBBTV, smart TV, LED TV, OLED TV, etc., and can also be applied to a smartphone.

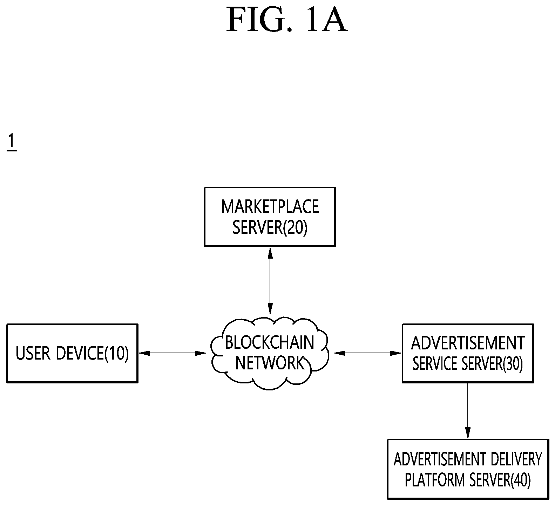

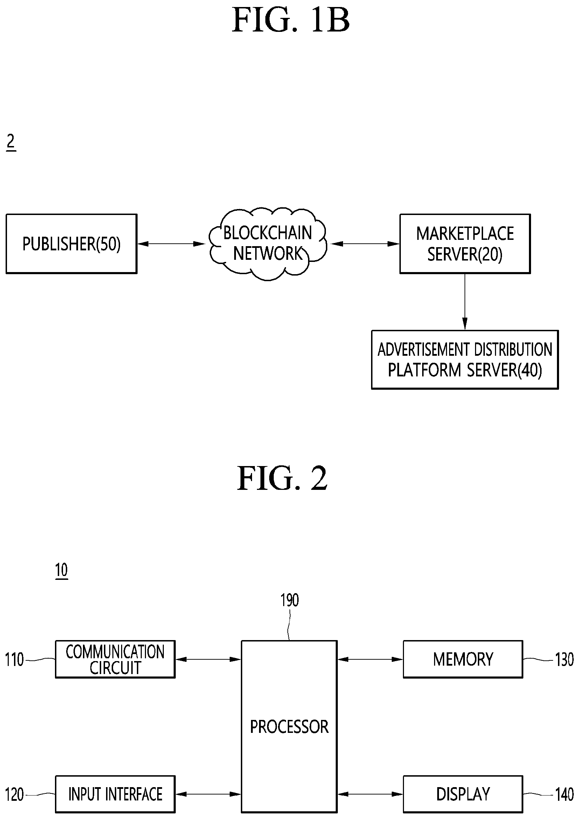

FIG. 1A is a diagram illustrating an advertisement system according to an embodiment of the present disclosure, and FIG. 1B is a diagram illustrating an advertisement system according to another embodiment of the present disclosure.

Referring to FIG. 1A, the advertisement system 1 can include a user device 10, a marketplace server 20, an advertisement service server 30, and an advertisement delivery platform server 40.

The user device 10 can display a service screen for registering an advertisement area.

The user device 10 can obtain advertisement sale information including personal information, advertisement area information, and advertisement use information through a service screen.

The user device 10 can transmit the obtained advertisement sale information to the marketplace server 20 through the communication circuit 110.

The marketplace server 20 can register the received advertisement sale information in a database.

The advertisement service server 30 can transmit advertisement purchase information to the market place server 20.

The marketplace server 20 can obtain a user list suitable for advertisement purchase information based on a set of advertisement sale information stored in a database according to the received advertisement purchase information.

The market place server 20 can transmit the user list to the advertisement service server 30 and receive an advertisement purchase request from the advertisement service server 30.

The marketplace server 20 transmits advertisement purchase confirmation information to the user device 10 according to the received advertisement purchase request, and the user device 10 can display advertisement contract conclusion information based on the block purchase confirmation information.

The marketplace server 20 can transmit a control signal to the advertisement distribution platform server 40 to transmit advertisement to the user device 10.

The advertisement distribution platform server 40 can transmit an advertisement to the corresponding user device 10 during the posting period of the advertisement according to reception of the control signal.

The blockchain network can record advertisement sale registration of the user device 10, advertisement purchase registration of the advertiser service server 30, and advertisement area transaction history.

The user device 10, the marketplace server 20, the advertiser service server 30, and the advertisement distribution platform server 40 can communicate with each other through an Internet connection.

Referring to FIG. 1B, an advertisement system 2 according to another embodiment of the present disclosure can include a user device 10, a publisher 50, a marketplace server 20, and an advertisement distribution platform server 40.

The publisher 50 can be client software that registers the advertisement area of the user device 10 with the market place server 20 for sale.

The market place server 20 can register the advertisement area and personal information of the user device 10 and conduct a transaction with the advertisement service server 30.

If the sale of the advertisement area is completed, the market place server 20 can transmit the cost to the user device 10 in the form of points or encrypted currency.

The blockchain network can record sale registration, sale history, and advertisement viewing history of advertising area.

The advertisement distribution platform server 40 can transmit advertisement content to the user device 10 and receive an event.

FIG. 2 is a block diagram illustrating the configuration of a user device according to an embodiment of the present disclosure.

The user device 10 can be implemented a fixed or movable device such as a projector, a mobile phone, a smart phone, a desktop computer, a laptop computer, a digital broadcast terminal, a personal digital assistant (PDA), a portable multimedia player (PMP), a navigation device, a tablet PC, a wearable device, a set-top box (STB), a DMB receiver, radio, desktop computer, or TV.

Referring to FIG. 2, the user device 10 can include a communication circuit 110, an input interface 120, a memory 130, a display 140 and a processor 190.

The communication circuit 110 can transmit/receive data with external devices such as other user device or server using wired/wireless communication technology.

The communication circuit 110 can perform communication using one communication standard of GSM (Global System for Mobile communication), CDMA (Code Division Multi Access), LTE (Long Term Evolution), 5G, WLAN (Wireless LAN), Wi-Fi (Wireless-Fidelity), Bluetooth, RFID (Radio Frequency Identification), Infrared Data Association (IrDA), ZigBee, or NFC (Near Field Communication).

The input interface 120 can include a camera for inputting a video signal, a microphone for receiving an audio signal, and a user input unit for receiving information from a user.

Here, a camera or microphone can be treated as a sensor, and signal obtained from the camera or microphone can be referred to as sensing data or sensor information.

The memory 130 can store various software and data related to the operation of the user device 10.

The display 140 can display an image signal received from the outside.

The processor 190 can control overall operation of the user device 10.

The processor 190 can generate a control signal for controlling the external device and transmit the generated control signal to the external device if linkage of the external device is required to perform the operation of the user device 10.

The processor 190 can control at least some of the components of the user device 10 in order to drive an application program stored in the memory 130.

The processor 190 can combine and operate two or more of the components included in the user device 10 to drive an application program.

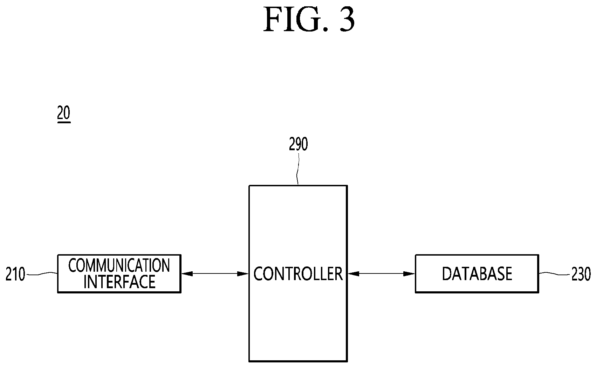

FIG. 3 is a block diagram for explaining the configuration of a marketplace server according to an embodiment of the present disclosure.

Referring to FIG. 3, the marketplace server 20 can include a communication interface 210, a database 230 and a controller 290.

The communication interface 210 can perform internet communication with the user device 10 or the advertiser service server 30. The communication interface 210 can include a communication circuit for Internet communication.

The database 230 can store advertisement sale information received from the user device 10 and advertisement purchase information received from the advertisement service server 30.

The controller 290 can control overall operation of the marketplace server 20.

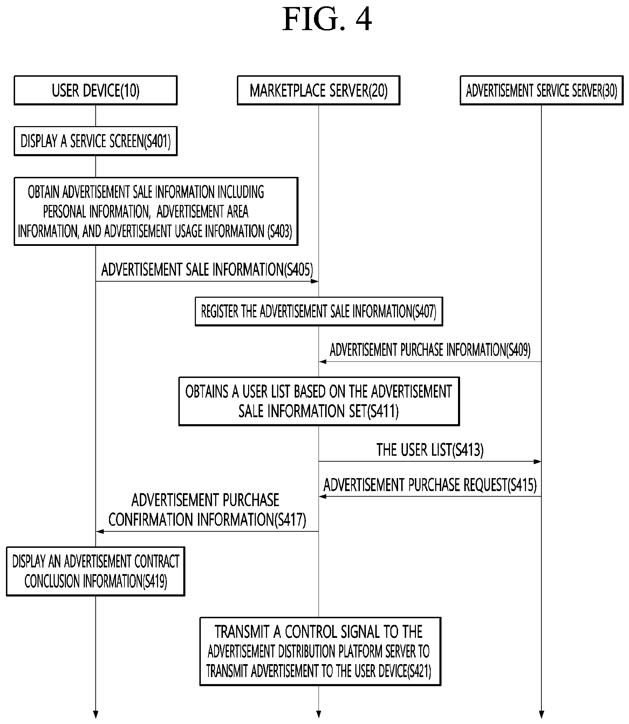

FIG. 4 is a ladder diagram for explaining a method of operating an advertisement system according to an embodiment of the present disclosure.

Referring to FIG. 4, the processor 190 of the user device 10 can display a service screen on the display 140 (S401).

In an embodiment, the service screen can be a screen providing a service of selling an advertisement area on the display 140 of the user device 10.

The processor 190 of the user device 10 can obtain advertisement sale information including personal information, advertisement area information, and advertisement usage information through the service screen (S403).

The personal information can include one or more of the user's gender, age, place, content or advertisement viewing history, text message history received from the user device 10, and use history of the user's home appliance.

The user can set the open range (or provision range) of personal information through the service screen. That is, the user can open some or all of personal information.

Advertisement area information can include one or more of a type of screen on which an advertisement is to be displayed, a size of an advertisement area, a type of advertisement desired by a user, and a type of target advertisement.

The advertisement use information can include one or more of an advertisement period during which an advertisement is to be posted in an advertisement area and a sales cost according to advertisement display.

The sale cost can be a coin used on the blockchain platform.

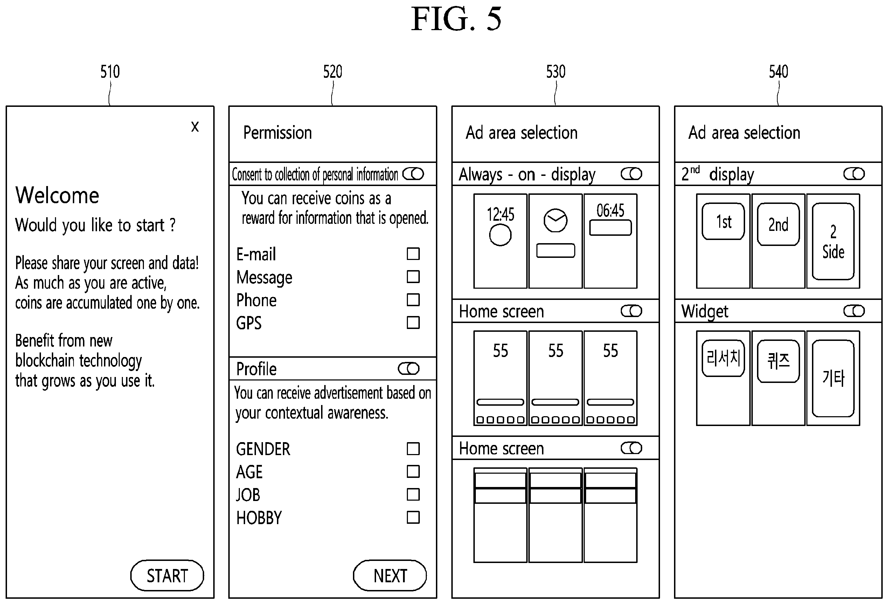

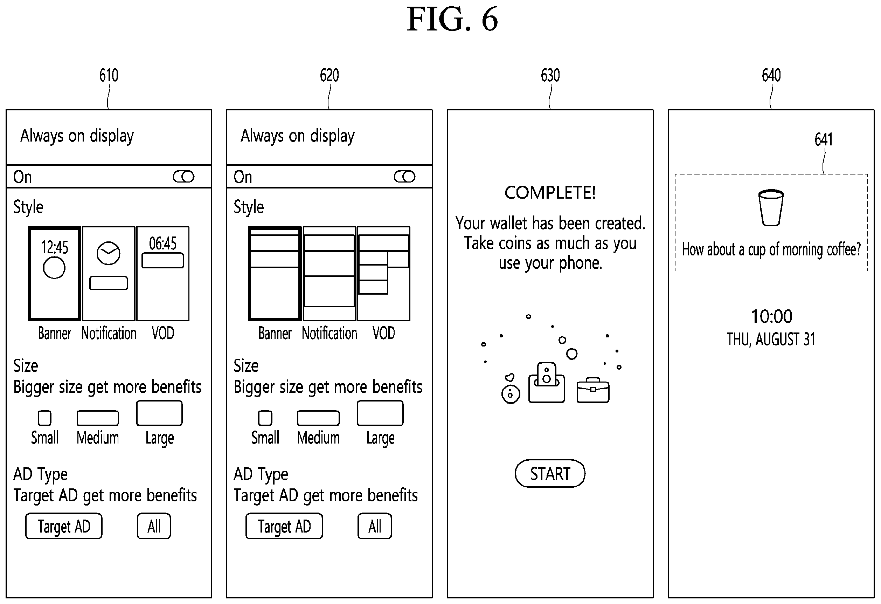

FIGS. 5 and 6 are diagrams illustrating a process of setting personal information and advertisement area information through service screens according to an embodiment of the present disclosure.

Each screen of FIGS. 5 to 6 can be a service screen.

Referring to FIG. 5, the user device 10 can display an initial screen 510 on the display 140 according to execution of an advertisement service application. The advertisement service application can be an application providing a service for obtaining compensation through the sale of an advertisement area.

The advertisement service application can be installed in the user device 10.

After the initial screen 510, a personal information setting screen 520 can be displayed.

The personal information setting screen 520 can be a screen for setting whether the user of the user device 10 agrees to collect personal information and setting an open range of personal information.

The first and second advertisement area selection screens 530 and 540 can be screens for setting an advertisement area of the display 140.

The first advertisement area selection screen 530 can include an always-on-display screen, a home screen, and a smart board screen.

The second advertisement area selection screen 530 can include a second display screen and a widget screen.

The user device 10 can select an advertisement area to be sold through the first and second advertisement area selection screens 530 and 540.

FIG. 6 illustrates screens providing a service of editing an advertisement area according to a user's taste.

The first editing screen 610 is a screen for editing the style (or type) of an advertisement area, the size of an advertisement area, and the type of a target advertisement on an always-on-display screen.

The screen style can include a banner type, notification type, and VOD type.

The size of the advertisement area can include small, medium, and large.

The type of the target advertisement can include a target AD type indicating that only the targeted advertisement is displayed in the advertisement area and all type.

The second editing screen 620 is a screen for editing the style (or type) of an advertisement area, the size of an advertisement area, and the type of a target advertisement on the smart board screen.

The screen style can include a banner type, notification type, and VOD type.

The size of the advertisement area can include small, medium, and large.

The type of the target advertisement can include a target AD type indicating that only the targeted advertisement is displayed in the advertisement area and all type.

As above, if the advertisement area information and advertisement use information are set, the wallet creation completion screen 630 can be displayed.

The wallet creation completion screen 630 can be a blockchain wallet to receive compensation to be obtained due to the sale of the advertisement area.

The advertisement posting screen 640 can be a screen showing a state in which the advertisement area of the actual user device 100 is sold by the advertisement buyer and the advertisement is displayed.

The advertisement posting screen 640 can include an advertisement area 641 in which advertisement is displayed on the always-on-display screen of the user device 100.

As described above, according to an embodiment of the present disclosure, a user can edit the style, size, etc. of an advertisement area, and thus can receive a user-customized advertisement.

Meanwhile, the user device 10 can transmit the advertisement sale information 405 to the market place server 20 by including it in meta data of a human NFT (Non-Fungible Token) .

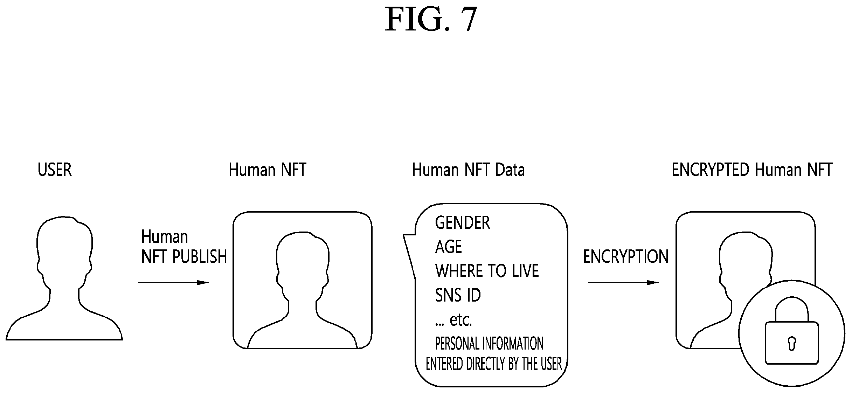

FIG. 7 is a diagram illustrating a human NFT according to an embodiment of the present disclosure.

Users can issue Human NFT. The user device 10 can generate a human NFT through an advertisement service application. A human NFT can be an NFT capable of identifying a user.

The meta data of the human NFT can include advertisement sale information including personal information, advertisement area information, and advertisement use information.

The meta data of the human NFT can further include information directly input by the user.

The user device 10 can encrypt the human NFT including advertisement sale information and transmit the encrypted human NFT to the market place server 20.

The marketplace server 20 can identify the user of the user device 10 through the human NFT and obtain advertisement sale information of the identified user.

The marketplace server 20 can decrypt the encrypted human NFT.

Again, Fig. 4 will be described.

The processor 190 of the user device 10 can transmit the obtained advertisement sale information to the marketplace server 20 through the communication circuit 110 (S405).

The processor 190 can transmit human NFT to the marketplace server 20 by including advertisement sale information in the Huma NFT of FIG. 7.

The processor 190 can register advertisement sale information in the marketplace server 20 through a smart contract of a blockchain platform.

Transmitting advertisement sale information to the marketplace server 20 can be a smart contract subscription process.

The controller 290 of the marketplace server 20 can register the received advertisement sales information in the database 230 (S407).

The controller 290 of the marketplace server 20 can store the received advertisement sale information in the database 230.

The database 230 can store an advertisement sale information set including advertisement sale information received from each of a plurality of user devices.

The advertisement service server 30 transmits advertisement purchase information to the market place server 20 (S409).

The advertisement service server 30 can be a server operated by an advertiser or an advertisement agency.

The advertisement service server 30 can transmit advertisement purchase information for purchasing an advertisement area provided through the user device 10 to the marketplace server 20.

The advertisement purchase information can include a target segment (a group of customers who will watch the target advertisement), an advertisement posting cost, and an advertisement posting period.

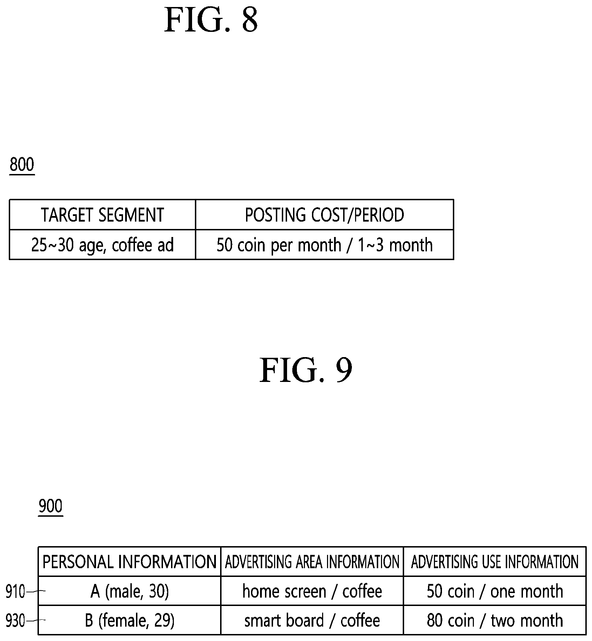

FIG. 8 is a diagram illustrating advertisement purchase information according to an embodiment of the present disclosure.

Referring to FIG. 8, advertisement purchase information 800 can include a target segment including a target age group and a target advertisement type, and advertisement posting cost and posting time.

Again, Fig. 4 will be described.

The controller 290 of the marketplace server 20 obtains a user list suitable for the advertisement purchase information based on the advertisement sale information set stored in the database 230 according to the received advertisement purchase information (S411).

The controller 290 can compare the advertisement sale information set with the advertisement purchase information, and obtain a user list including at least one advertisement sale information corresponding to the advertisement purchase information according to a comparison result.

FIG. 9 is a diagram illustrating a user list according to an embodiment of the present disclosure.

The user list 900 can include a first user item 910 including personal information, advertisement area information, and advertisement use information on the first user A, and a second user item 930 including personal information, advertisement area information, advertisement use information on the second user B.

The marketplace server 20 can extract a user list 900 corresponding to the advertisement purchase information 800 from the database 230 using the advertisement purchase information 800 shown in FIG. 8.

The controller 290 of the marketplace server 20 transmits the user list to the advertisement service server 30 through the communication interface 210 (S413) and receives an advertisement purchase request from the advertisement service server 30 (S415).

The advertisement service server 30 can display a user list and select advertisement sale information corresponding to a user who wants to purchase an advertisement from the user list.

The advertisement service server 30 can select a user item to purchase an advertisement from the user list 900.

The advertisement service server 30 can transmit an advertisement purchase request including the selected user item to the marketplace server 20.

That is, the advertisement purchase request can be an action of purchasing an advertisement area of a selected user item.

The marketplace server 20 can receive an advertisement purchase request through a smart contract of a blockchain platform.

The advertisement purchase request can be an acceptance process in response to a smart contract subscription.

The controller 290 of the marketplace server 20 transmits advertisement purchase confirmation information to the user device 10 according to the received advertisement purchase request (S417), and the user device 10 can display an advertisement contract conclusion information based on the advertisement purchase confirmation information on the display 140 (S419).

For example, if the first user item 910 of FIG. 9 is a purchase target of an advertiser, the marketplace server 20 can transmit advertisement purchase confirmation information to the user device 10 corresponding to the first user item 910.

The marketplace server 20 can automatically transmit advertisement purchase confirmation information to the user device 10 through a smart contract according to the advertisement purchase request received from the advertisement service server 30.

The advertisement purchase confirmation information can include an action to approve advertisement sale information provided by the user device 10 and a coin according to advertisement purchase.

That is, the reward included in the advertisement purchase confirmation information can be automatically deposited into the blockchain wallet of the user device 10 according to the smart contract. According to the smart contract, the reward included in the advertisement purchase confirmation information can be recorded on the blockchain network.

The controller 290 of the marketplace server 20 transmits a control signal to the advertisement distribution platform server 40 to transmit advertisement to the user device 10 (S421).

The control signal can include identification information of the user device 10, type of advertisement, posting period of the advertisement, and information about the advertisement area of the user device 10.

The control signal can include identification information of the user device 10, advertisement area information, and advertisement use information.

The advertisement distribution platform server 40 can transmit an advertisement to the corresponding user device 10 during the posting period of the advertisement according to reception of the control signal.

The user device 10 can display the advertisement received from the advertisement distribution platform server 40 in the set advertisement area during the posting period.

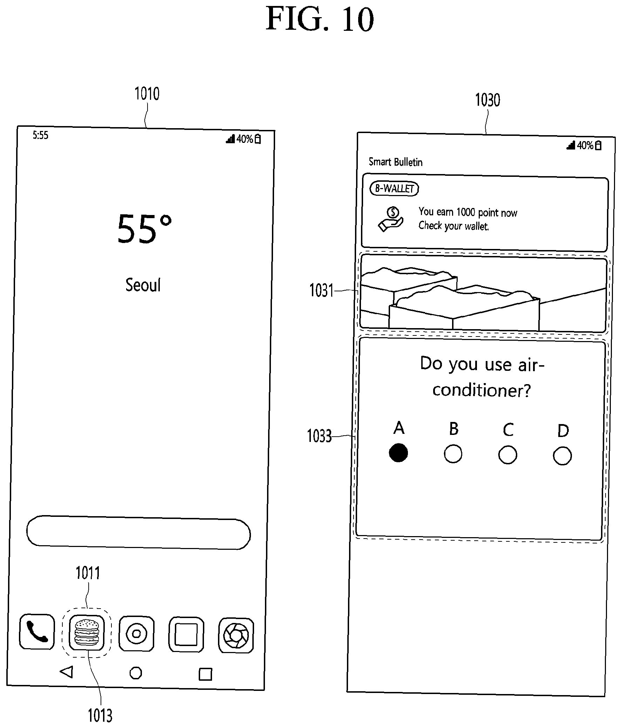

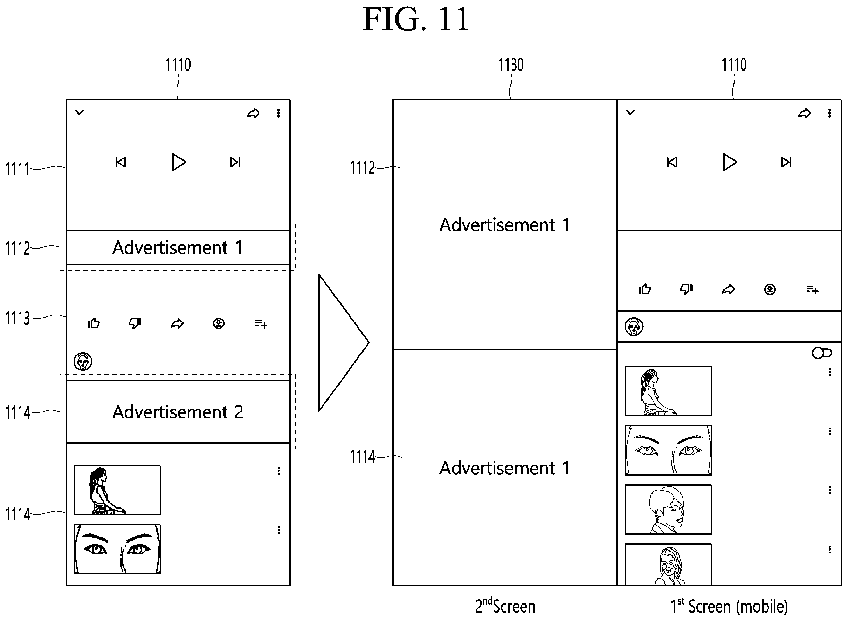

FIGS. 10 and 11 are diagrams illustrating examples of providing advertisement in advertisement area of user devices in various forms according to embodiments of the present disclosure.

In FIGS. 10 and 11, it is assumed that a contract for use of an advertising area is concluded between a user and an advertiser or an advertising agency through a smart contract as in FIG. 4.

Referring to FIG. 10, the home screen 1010 of the user device 10 includes an advertisement area 1011 on a position corresponding to an application icon.

The advertisement area 1011 includes advertisement content 1013 transmitted by the advertisement distribution platform server 40.

The advertising content 1013 can be an image of a product or an icon corresponding to a recommended application.

Space utilization of the display area of the user device 10 can increase as the area of the application icon is used as an advertisement area.

The smart board screen 1030 can include a card banner area 1031 representing an advertisement area and a widget area 1033.

The size of each of the card banner area 1031 and the widget area 1033 can be adjusted according to user setting.

If the size of each of the card banner area 1031 and the widget area 1033 is different, the cost for posting an advertisement can be different.

The card banner area 1031 can be a card type advertisement area.

The widget area 1033 can include an advertisement that induces user participation. The user participation inducing advertisement can be an advertisement that induces a user input such as a quiz advertisement or research.

FIG. 11 illustrates an example in which advertisement is provided if the display 140 of the user device 10 has a dual screen.

Referring to FIG. 11, on the first screen 1110 of the user device 10, a video playback area 1111, a first advertisement area 1112, a video information area 1113, a second advertisement area 1114, and other video information area 1115 can be included.

In this state, if the display 140 of the user device 10 is expanded to a dual screen, the first advertisement area 1112 and the second advertisement area 1114 are displayed on the second screen 1130, and the second advertisement area 1114 is displayed. A video playback area 1111, a video information area 1113, and another video information area 1115 can be displayed on one screen 1110.

That is, according to the embodiment of FIG. 11, the area where the advertisement is displayed and the area where the content is played can be separated through the dual screen, so that the user can view the advertisement more intuitively.

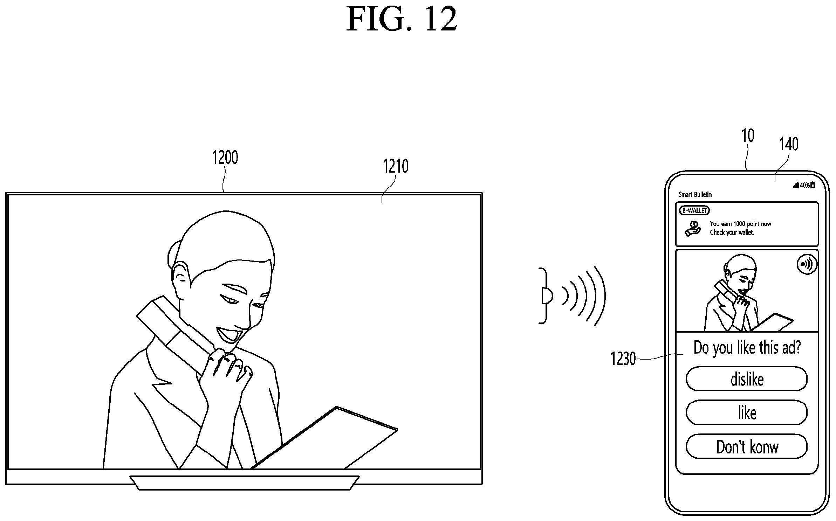

FIG. 12 is a diagram for explaining a process in which a user device determines a user's advertisement preference according to an embodiment of the present disclosure.

Referring to FIG. 12, the TV 1200 is playing an advertisement video 1210 for a product.

The user device 10 can receive information about the advertisement video 1210 from the TV 1200 through wireless communication. Information on the advertising image 1210 can include one or more of the name of a product being advertised in the advertising image 1210 and the type of product.

The user device 10 can display a pop-up window 1230 on the display 140 in response to receiving information about the advertisement video 1210.

The pop-up window 1230 can be a window for determining the preference of an advertisement currently being viewed on the TV 1200.

The user device 10 can collect advertisement viewed by the user and preference for advertised product through the pop-up window 1230.

The collected preferences can be included in the personal information obtained in step S403 of FIG. 4.

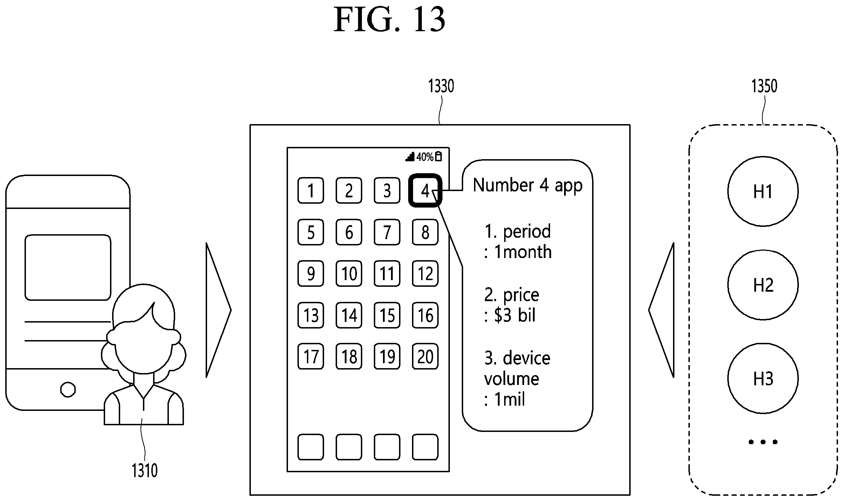

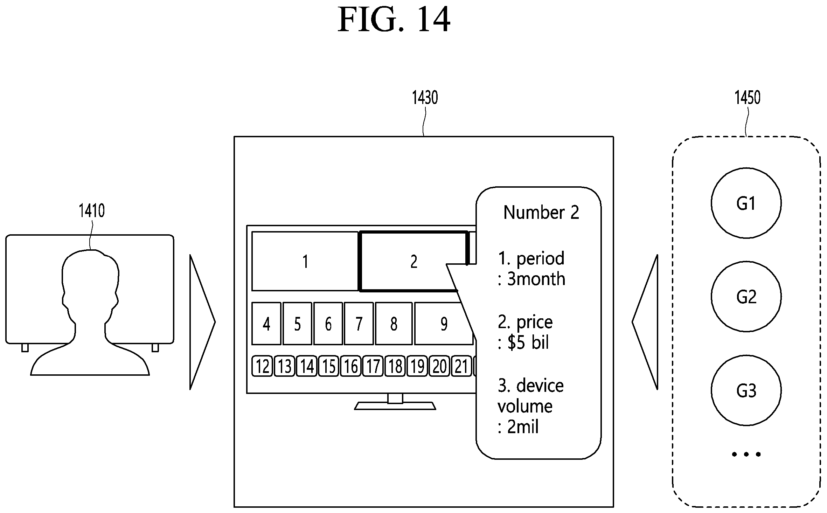

FIGS. 13 and 14 are diagrams illustrating a process of trading an advertisement area between a manufacturer of a user device and an advertiser through a marketplace.

FIG. 13 is a case where the user device 10 is a mobile device, and FIG. 14 is a case where the user device 10 is a TV.

Referring to FIG. 13, a manufacturer 1310 of a mobile device can be a seller of an advertisement area.

All of the following processes can be performed by the smart contract of the blockchain platform.

That is, the manufacturer 1310 of the mobile device can load launcher apps into the mobile device. The manufacturer 1310 of the mobile device can set an area corresponding to any one of the launcher apps as an advertisement area.

For example, the mobile device manufacturer 1310 can set an area corresponding to the fourth icon on the home screen as an advertisement area, and can additionally set the period, cost, and number of devices for the advertisement area.

The marketplace server 20 can register advertisement offer information 1330 including the location of the advertisement area on the mobile device (app 4), advertisement period, advertisement cost, and number of devices provided to the manufacturer 1310 of the mobile device.

An advertiser or an advertising agency can be an advertisement buyer 1350.

The advertisement buyer 1350 can purchase a corresponding advertisement offer by referring to advertisement offer information 1330 registered in the marketplace server 20.

In this case, advertisement content provided by the advertisement buyer 1350 can be displayed in an area corresponding to the fourth app of the mobile device.

Referring to FIG. 14, a TV manufacturer 1310 can be a seller of an advertisement area.

All of the following processes can be performed by the smart contract of the blockchain platform.

That is, the manufacturer 1410 of the TV can mount launcher apps on the TV. The TV manufacturer 1410 can set an area corresponding to any one app among launcher apps or content areas representing each of the launcher apps as an advertisement area.

The content area can be an area where thumbnail images of content provided by the launcher app are displayed.

For example, the TV manufacturer 1410 can set an area corresponding to the second content area on the home screen as an advertisement area, and can additionally set the period, cost, and number of devices for the advertisement area.

The marketplace server 20 can register advertisement offer information 1430 including the location of the advertisement area on the TV (second content area), advertisement period, advertisement cost, and number of devices provided to the TV manufacturer 1410.

An advertiser or an advertising agency can be an advertisement buyer 1450.

The advertisement buyer 1450 can purchase a corresponding advertisement offer by referring to advertisement offer information 1430 registered in the marketplace server 20.

In this case, advertisement content provided by the advertisement buyer 1450 can be displayed in the second content area of the TV.

According to an embodiment of the present disclosure, the above-described method can be implemented as a processor-readable code in a medium on which a program is recorded. Examples of media readable by the processor include ROM, RAM, CD-ROM, magnetic tape, floppy disk, optical data storage, and the like.

The configuration and method of the above-described embodiments are not limitedly applicable to the user device described above, but the above embodiments can be configured by selectively combining all or part of each embodiment so that various modifications can be made.

## Claims

1. A marketplace server comprising:
a communication interface configured to receive advertisement sale information including personal information, advertisement area information, and advertisement use information from a user device;
a database configured to store the advertisement sale information; and
a controller configured to:
receive an advertisement purchase request for the advertisement sale information from an advertiser service server and
transmit advertisement purchase confirmation information including a reward to the user device according to the received advertisement purchase request.

2. The marketplace server of claim 1, wherein the controller is further configured to:
receive advertisement purchase information from the advertiser service server,
compare the received advertisement purchase information with a set of advertisement sale information corresponding to a plurality of user devices, and
obtain a user list including a plurality of user items matched with the advertisement purchase information according to a comparison result.

3. The marketplace server of claim 2, wherein the controller is further configured to:
transmit the user list to the advertiser service server, and
receive the advertisement purchase request including a user item that the advertiser service server wants to purchase among the plurality of user items from the advertiser service server.

4. The marketplace server of claim 3, wherein the controller is further configured to:
extract a user list matched with the advertisement purchase information from the advertisement sale information set.

5. The marketplace server of claim 1, wherein the controller is further configured to:
transmit a control signal to an advertisement distribution platform server to transmit an advertisement corresponding to the advertisement area information and the advertisement usage information to the user device.

6. The marketplace server of claim 1, wherein the user device and the marketplace server are connected through a blockchain network,
the marketplace server and the advertiser service server are connected through the blockchain network,
wherein the controller is further configured to:
automatically, deposit the reward into a wallet corresponding to the user device through a smart contract according to the advertisement purchase request.

7. The marketplace server of claim 1, wherein the controller is further configured to:
receive a human non-fungible token (NFT) including the advertisement sale information from the user device.

8. The marketplace server of claim 1, wherein the advertisement area information includes an advertisement area set by a user of the user device on a screen of the user device,
the advertisement usage information includes a advertisement posting period and a posting cost in the advertisement area.

9. The marketplace server of claim 1, wherein a degree of compensation is varied depending on an open range of the personal information.

10. An operation method of a marketplace server comprising:
receiving advertisement sale information including personal information, advertisement area information, and advertisement use information from a user device;
storing the advertisement sale information;
receiving an advertisement purchase request for the advertisement sale information from an advertiser service server; and
transmitting advertisement purchase confirmation information including a compensation to the user device according to the received advertisement purchase request.
